# EUROPÄISCHE PATENTSCHRIFT

(11) **EP 2 840 757 B1**
(45) Veröffentlichungstag und Bekanntmachung des Hinweises auf die Patenterteilung: **20.09.2017**
(21) Anmeldenummer: 14177088.3
(22) Anmeldetag: 15.07.2014
(51) Int. Cl.: H04L 29/06

(54) **INDIVIDUELLE ZENTRALE VERWALTUNG VON CHIPKARTEN**
INDIVIDUAL CENTRAL ADMINISTRATION OF CHIPCARDS
ADMINISTRATION INDIVIDUELLE ET CENTRALE DES CARTES DE PUCE

(30) Priorität: 17.07.2013 DE 102013107602
(43) Veröffentlichungstag der Anmeldung: 25.02.2015
(73) Patentinhaber: Deutsche Telekom AG, 53113 Bonn (DE)
(72) Erfinder: Breuer, Jörg, 57223 Kreuztal (DE); Moos, Rainer, 57080 Siegen (DE)
(74) Vertreter: Blumbach Zinngrebe

(56) Entgegenhaltungen:
- EP-A1- 1 349 032
- US-A1- 2006 085 848
- US-A1- 2008 082 442
- US-A1- 2010 082 487

## Beschreibung

Die Erfindung betrifft ein kartenbasiertes System, insbesondere ein Chipkarten basiertes System, ein Verfahren zum Betreiben eines solchen Systems, eine kundenbezogene Kommunikations-Endeinrichtung und eine kundenbezogene Karten-Verwaltungseinrichtung zum Einsatz in einem solchen kartenbasierten System sowie ein Computerprogramm zur Steuerung des Verfahrens.

Kartenbasierte Systeme, wie z. B. Bezahlsysteme sind hinlänglich bekannt. Um ein kartenbasiertes System nutzen zu können, benötigt ein Kunde eine geeignete Karte vorzugsweise in Form einer Smartcard oder Chipkarte, die insbesondere als Schlüsselträger für kryptografische Prozesse zur Realisierung von Authentizität, Identität und Vertraulichkeit dient. Solche Karten werden dann über sogenannte Kartenleser oder Kartenterminals in der jeweiligen kartenbasierten Anwendung bzw. dem kartenbasierten System verwendet.

Smartcards werden meist dann verwendet, wenn höhere Sicherheitsanforderungen an ein System und dessen Komponenten gestellt werden. Die Anforderungen können dabei entweder vom Betreiber des Systems selbst definiert werden, wie z. B. bei Kartensystemen von Mastercard und Visa, oder aber auch durch gesetzliche Vorgaben geregelt werden, wie beispielsweise bei der qualifizierten elektronischen Signatur (QES). Häufig müssen dabei Smartcards nach entsprechenden technischen Richtlinien, die z. B. in Deutschland vom Bundesamt für Sicherheit in der Informationstechnik (BSI) festgelegt werden, entwickelt und die geforderte Sicherheit durch eine Sicherheitsevaluierung bzw. Zertifizierung nachgewiesen werden. Dabei wird üblicherweise von einer unabhängigen Stelle geprüft, ob die Karten die geforderten Sicherheitsziele erfüllen. Erst wenn die Sicherheitszertifizierung und die Konformität zur technischen Richtlinie bestätigt sind, dürfen diese Karten im jeweiligen System eingesetzt werden.

Aus der EP 1 349 032 B1 ist ein Netzwerksystem bekannt, welches eine sichere Nutzerauthentifizierung ermöglicht. Das Netzwerksystem weist eine Client-Infrastruktur auf, zu der ein Client-Computer, ein Kartenleser und eine Chipkarte gehören. Der Kartenleser liefert den Zugang zur Chipkarte und ist über einen USB-Bus oder eine drahtlose Verbindung gemäß dem Bluetooth Standard mit dem Client-Computer verbunden. Ferner weist das Netzwerk eine Server-Infrastruktur mit einem Anwendungs-Server auf. Ein verschlüsselter Kanal kann zwischen der Client-Infrastruktur und der Server-Ifrastruktur über ein erstes Netzwerk aufgebaut werden. Zudem kann eine authentisierte Verbindung zwischen der Client-Infrastruktur und dem Anwendungs-Server bestehen.

Aus der US 2010 / 0 082 487 A1 ist ein Verfahren zum Verwalten von virtuellen Karten in einer mit einem virtuellen Kartenmanager verbundenen virtuellen Karten-Engine bekannt. Die als "virtuelle Karten" bezeichneten, elektronisch ausgestellten und verwalteten Karten, wurden aufgrund von Problemen mit Kunststoffkarten entwickelt. Die Verwaltung betrifft Geschenkkarten, Kundenkarten, Mitgliedskarten oder Treuekarten. Das Verfahren umfasst: Bestimmen eines Abstands zwischen einem mobilen Computer und einer Händler-Verkaufsstelle, wobei die Händler-Verkaufsstelle mit einem Kartendienstleister und einer der virtuellen Karten assoziiert ist; selektive Darstellung der virtuellen Karten auf einem Display des mobilen Computers auf der Basis des Abstands; und selektives Aktivieren einer virtuellen Kartentransaktion zwischen der virtuellen Karte und dem Kartendienstanbieter basierend auf der Entfernung.

Aus der US 2008 / 0 082 442 A1 ist ein Verfahren zum Managen von Kreditkarten mittels eines Kommunikationsendgeräts bekannt. Das Verfahren umfasst: Eingeben von Kreditartendaten in das Kommunikationsendgerät mittels Tasteneingabe und, falls eine auf die Kreditkarte bezogene Funktion angefordert wird, Durchführen der Funktion. Die Funktion umfasst: Übertragen der Kreditartendaten an einen PC, Verbinden mit einem Kartensicherheitszentrum zum Lösen eines Problems in Bezug auf eine Kreditkarte, und Verbinden an eine Homepage eines Kreditkartenunternehmens zum Suchen nach Kreditkarten-Nutzungsinformationen.

Wenn man heute in seine Geldbörse sieht, stellt man fest, dass dort nicht nur eine Smartcard oder Chipkarte enthalten ist, sondern meist viele verschiedene Karten für die unterschiedlichsten kartenbasierten Anwendungen abgelegt sind. Dies können Bonuskarten, Kundenkarten, Mitgliedskarten, Unternehmensausweise, Reisepässe, Zutrittskarten für Gebäude oder Karten mit höheren Sicherheitsanforderungen sein, wie z. B. Payment-Karten von unterschiedlichen Geldinstituten, eine Karten für die qualifizierte elektronische Signatur und vieles mehr. Erschwert wird die Nutzung einer solchen Kartenmenge noch dadurch, dass meistens jede Karten durch eine individuelle PIN geschützt ist, die ein Kunde sich merken sollte.

Der Erfindung liegt nunmehr die Aufgabe zugrunde, ein kartenbasiertes System, ein Verfahren zum Betreiben eines solchen Systems sowie ein Computerprogramm verfügbar zu machen, welche dem Nutzer mehrerer verschiedener Karten deren Handhabung und Benutzung erleichtert, die Verwendung neu herausgegebener Karten schnell und in einfacher Weise ermöglicht, ohne auf die Sicherheit der Karten verzichten zu müssen und ohne die Sicherheitsanforderungen an ein kartenbasiertes System zu beeinträchtigen.

Ein Kerngedanke der Erfindung kann darin gesehen werden, heute oder in Zukunft am Markt verfügbare, insbesondere zertifizierte Smartcards über eine private bzw. kundenbezogene Karten-Verwaltungseinrichtung beliebigen kundenbezogenen Endgeräten, auf denen jeweils eine Karten-Zugriffsanwendung vorzugsweise in Form einer App installiert ist, für die jeweiligen kartenbasierten Anwendungen nutzbar zu machen.

Ein weiterer Aspekt kann darin gesehen werden, dass dank der Erfindung die hohen Sicherheitsanforderungen und damit verbundenen Zertifizierungen der jeweiligen Smartcards bzw. Smartcard basierten Anwendungen aufrechterhalten werden können.

Die oben genannte technische Aufgabe wird durch die Verfahrensschritte des Anspruchs 1 gelöst.

Danach ist ein Verfahren zum Betreiben eines kartenbasierten Systems vorgesehen, welches eine kundenbezogene Kommunikations-Endeinrichtung und eine davon getrennte kundenbezogene Karten-Verwaltungseinrichtung, in welcher wenigstens eine kundenbezogene Karte, insbesondere eine Chipkarte installiert ist, aufweist.

Um wenigstens eine kundenbezogene Karte sicher benutzen zu können, wird eine sichere Verbindung zwischen der Kommunikations-Endeinrichtung des Kunden und dessen Karten-Verwaltungseinrichtung hergestellt. Um sicher zu stellen, dass der Kunde bzw. die Kommunikations-Endeinrichtung auch tatsächlich mit einer in der Karten-Verwaltungseinrichtung installierten Karte kommunizieren zu dürfen, wird eine Authentifizierung zwischen der Kommunikations-Endeinrichtung und der Karten-Verwaltungseinrichtung ausgeführt. Hierzu können bekannte Authentifizierungsverfahren oder auch speziell entwickelte Authentifizierungsverfahren zum Einsatz kommen.

An der Kommunikations-Endeinrichtung wählt der Kunde eine in der Karten-Verwaltungseinrichtung installierte kundenbezogene Karte aus. Nunmehr kann eine kartenbasierte Anwendung gestartet oder ausgeführt werden, welche über die Kommunikations-Endeinrichtung und die sichere Verbindung mit der ausgewählten, in der Karten-Verwaltungseinrichtung installierten kundenbezogenen Karte kommunizieren kann.

Dank der Erfindung ist es nunmehr nicht mehr notwendig, dass ein Kunde all seine Karten, die auch zertifiziert sein können, bei sich tragen muss. Demzufolge ist auch die Gefahr, dass ein Kunde seine Karten verlieren kann, deutlich reduziert. Vorzugsweise ist nämlich die Karten-Verwaltungseinrichtung in der Wohnung des Kunden aufgestellt.

Angemerkt wird an dieser Stelle, dass der Begriff Karte alle Hardwaremodule, insbesondere Smartcards und Chipkarten, aber auch Magnetstreifenkarten erfasst, die insbesondere als Schlüsselträger für kryptografische Prozesse zur Realisierung von Authentizität, Identität und Vertraulichkeit geeignet sind.

Weiterhin wird angemerkt, dass die in der Karten-Verwaltungseinrichtung eingesetzten Karten unverändert sind, das heißt in der Form eingesetzt werden, wie sie ansonsten in herkömmlicher Weise verwendet werden. Aus diesem Grund können die hohen Sicherheitsanforderungen und damit verbundenen Zertifizierungen der jeweiligen Smartcards bzw. Smartcard basierten Anwendungen auch bei Einsatz der Karten-Verwaltungseinrichtung aufrechterhalten werden.

Sind die kundenbezogenen Karten, wie üblich, jeweils durch einen individuellen Identifizierungscode, beispielsweise in Form einer Pin oder eines Passworts geschützt, kann der gezielte Zugriff für den Kunden auf die in der Karten-Verwaltungseinrichtung installierten Karte dadurch erleichtert werden, dass der Karten-Verwaltungseinrichtung ein individueller übergeordneter Identifizierungscode, vorzugsweise in Form einer PIN oder eines Passworts, zugeordnet wird, die individuellen Identifizierungscodes der installierten kundenbezogenen Karten in der Karten-Verwaltungseinrichtung gespeichert werden, wobei, vorzugsweise nach Aufforderung des Kunden, an der Kommunikations-Endeinrichtung der individuelle, übergeordnete Identifizierungscodes der Karten-Verwaltungseinrichtung eingeben und anschließend zur Karten-Verwaltungseinrichtung übertragen werden kann, welche dann der ausgewählten Karte den ihr zugeordneten individuellen Identifizierungscode zuführen kann.

Folglich muss sich der Kunde nur noch den der Karten-Verwaltungseinrichtung zugeordneten individuellen, übergeordneten Identifizierungscode und nicht mehr die individuellen Identifizierungscodes der installierten Karten merken. Dadurch können insbesondere Fehleingaben vermieden werden, die im ungünstigsten Fall zur Sperrung der Karten führen.

Damit der Kunde weiß, welche Karten zur Zeit in seiner Karten-Verwaltungseinrichtung installiert sind, können die in der Karten-Verwaltungseinrichtung installierten kundenbezogenen Karten auf der Kommunikations-Endeinrichtung in vorbestimmter Weise, vorzugsweise über die sichere Verbindung, angezeigt werden.

Kartensymbole oder Kartenlayouts der installierten Karten können in der Kommunikations-Endeinrichtung beispielsweise in automatisierter Form angezeigt werden. Denkbar ist, dass die Karten-Verwaltungseinrichtung automatisch erkennt, welche Karten installiert sind. Entweder überträgt sie dann die zu den installierten Karten hinterlegten Kartensymbole oder -layouts zur Kommunikations-Endeinrichtung. Alternativ ist denkbar, dass lediglich entsprechende Codes, welche die installierten Karten identifizieren, von der Karten-Verwaltungseinrichtung zur Kommunikations-Endeinrichtung übertragen werden, die darauf hin die bereits vorab für die verschiedenen Karten hinterlegten Kartensymbole oder - layouts unter Ansprechen auf die empfangenen Codes aufruft und dem Kunden anzeigt.

Um das Verfahren gegen einen Kartenmissbrauch weiter zu schützen, kann wenigstens ein vorbestimmter Bereich jeder in der Karten-Verwaltungseinrichtung zu installierenden kundenbezogenen Karte vorab gescannt und die Echtheit der jeweiligen gescannten Karte dann von der Karten-Verwaltungseinrichtung anhand des gescannten Bereichs geprüft werden. Die Karten-Verwaltungseinrichtung aktiviert dann vorzugsweise lediglich die Karten, deren Echtheit geprüft und bestätigt worden ist.

Gemäß einer bevorzugten Ausgestaltung wird in der Kommunikations-Endeinrichtung selbst eine kartenbasierte Anwendung gespeichert, so dass der Schritt des Ausführens einer kartenbasierten Anwendung in der Kommunikations-Endeinrichtung ausgeführt wird.

Gemäß einer weiteren bevorzugten Ausführungsform ist die kundenbezogene Kommunikations-Endeinrichtung als mobile Kommunikations-Endeinrichtung ausgebildet. Eine solche mobile Kommunikations-Endeinrichtung kann ein Smartphone, ein PDA oder jede andere tragbare Kommunikations-Endeinrichtung sein. In diesem Fall weist das kartenbasierte System wenigstens eine Kartenleseeinrichtung auf, welche dem Anbieter einer kartenbasierten Anwendung oder dem Betreiber des kartenbasierten Systems gehört. Bei dieser Ausführungsform wird eine kartenbasierte Anwendung in der Kartenleseeinrichtung oder einer anderen, mit der Kartenleseeinrichtung verbundenen Einrichtung des Anbieters bzw. Betreibers ausgeführt.

Um geforderte Sicherheiten hinsichtlich des verwendeten kartenbasierten System gewähren zu können, können zertifizierte Karten in der Karten-Verwaltungseinrichtung installiert werden. Verfahren zur Zertifizierung von Smartcards sind hinlänglich bekannt.

Um die Sicherheit des Verfahrens und damit des kartenbasierten Systems weiter zu erhöhen, kann dieses System inklusive der sicheren Verbindung, welche zwischen der Kommunikations-Endeinrichtung und der Karten-Verwaltungseinrichtung aufgebaut wird, ebenfalls zertifiziert werden.

Bei der sicheren Verbindung handelt es sich vorzugsweise um eine sichere Internetverbindung.

Eine sichere Verbindung kann beispielsweise unter Anwendung des Transport-Layer-Security (TLS)-Protokolls von der Karten-Verwaltungseinrichtung zur Kommunikations-Endeinrichtung aufgebaut werden. Die Kommunikations-Endeinrichtung fordert hierbei die Karten-Verwaltungseinrichtung über ein Wake-Up zu einem Verbindungsaufbau zu ihr auf. Ein ähnliches Verfahren ist in der TR3109-1 des BSI für das Smart Meter Gateway beschrieben.

Das oben genannte technische Problem wird ebenfalls durch die Merkmale des Anspruchs 8 gelöst.

Danach ist ein kartenbasiertes System, insbesondere ein Chipkarten basiertes System vorgesehen, welches eine einem Nutzer zugeordnete Kommunikations-Endeinrichtung aufweist. In der Kommunikations-Endeinrichtung ist eine Karten-Zugriffsanwendung, vorzugsweise in Form eines Apps, installiert. Die Kommunikations-Endeinrichtung weist eine erste programmierbare Steuereinheit und eine Netzzugangseinrichtung, insbesondere eine Internet-Zugangseinrichtung auf. Weiterhin umfasst das kartenbasierte System eine dem Nutzer zugeordnete Karten-Verwaltungseinrichtung, welche getrennt von der Kommunikations-Endeinrichtung aufgestellt ist und betrieben wird. Die Karten-Verwaltungseinrichtung enthält mehrere kontaktlose und/oder kontaktbehaftete Kartenleser, die jeweils zur Aufnahme und zum Lesen einer nutzerbezogenen Karte, insbesondere einer Chipkarte, ausgebildet sind. Bei den Kartenlesern handelt es sich vornehmlich um herkömmliche Kartenleser.

Weiterhin weist die Karten-Verwaltungseinrichtung eine zweite programmierbare Steuereinrichtung, eine Sicherheitseinrichtung, die insbesondere zur Individualisierung der Karten-Verwaltungseinrichtung dient, und eine Netzzugangseinrichtung, insbesondere eine Internet-Zugangseinrichtung auf. Die Sicherheitseinrichtung der Karten-Verwaltungseinrichtung und die Kartenzugriffsanwendung der Kommunikations-Endeinrichtung sind dazu ausgebildet, eine Authentifizierung zwischen der Kommunikations-Endeinrichtung und der Karten-Verwaltungseinrichtung durchzuführen.

Der Aufbau einer sicheren Verbindung zwischen der Karten-Verwaltungseinrichtung und der Kommunikations-Endeinrichtung sowie eine Authentifizierung können wie folgt ablaufen:
- Die Kommunikations-Endeinrichtung fordert die Karten-Verwaltungseinrichtung über einen Wake-Up dazu auf, einen TLS-Kanal zu ihr aufzubauen.
- Die Karten-Verwaltungseinrichtung prüft, ob die Kommunikations-Endeinrichtung als sichere Endeinrichtung in der Karten-Verwaltungseinrichtung registriert ist.
- Die Sicherheitseinrichtung der Karten-Verwaltungseinrichtung übernimmt die folgenden Aufgaben:
   ∘ Generierung von Zufallszahlen für den TLS-Kommando "ClientHello".
   ∘ Schlüsselaushandlung des TLS pre-master secrets gemäß Elliptic Curve Diffie-Hellman.
   ∘ Signaturerzeugung und -prüfung für Authentifizierung.
- Die Kommuniktaions-Endeinrichtung ist verantwortlich für die Generierung des master secrets und muss dazu das ausgehandelte pre-master secret verwenden.

Die Sicherheitseinrichtung ist ferner dazu ausgebildet, den Aufbau einer sicheren Verbindung von der Karten-Verwaltungseinrichtung zur Kommunikations-Endeinrichtung zu steuern. Die Karten-Zugriffsanwendung ist dazu ausgebildet, insbesondere mittels der ersten programmierbaren Steuereinrichtung eine in der Karten-Verwaltungseinrichtung installierte nutzerbezogene Karte auszuwählen und die Kommunikation zwischen einer kartenbasierten Anwendung und der ausgewählten nutzerbezogenen Karte über eine aufgebaute, sichere Verbindung zu steuern.

Angemerkt sei, dass es sich bei der Sicherheitseinrichtung um ein Sicherheitsmodul beispielsweise in Form einer Smartcard handeln kann.

Um dem Nutzer die Handhabung und den Gebrauch mehrerer, jeweils durch einen Identifizierungscode geschützten Karten zu erleichtern und ihn davor zu bewahren, all diese Identifizierungscodes auswendig lernen zu müssen, ist in der Sicherheitseinrichtung der Karten-Verwaltungseinrichtung ein individueller, übergeordneter Identifizierungscode zur Individualisierung der Karten-Verwaltungseinrichtung abgelegt. Die individuellen Identifizierungscodes der Karten sind vorzugsweise in einem sicheren Speicher, beispielsweise im Sicherheitsmodul der Karten-Verwaltungseinrichtung abgelegt. Die Karten-Zugriffsanwendung der Kommunikations-Endeinrichtung kann dazu ausgebildet sein, den Nutzer aufzufordern, den übergeordneten Identifizierungscode der Sicherheitseinrichtung einzugeben. Die Karten-Verwaltungseinrichtung ist dazu ausgebildet, unter Ansprechen auf den von der Kommunikations-Endeinrichtung empfangenen übergeordneten Identifizierungscode den individuellen Identifizierungscode der ausgewählten Karte aus dem Speicher auszulesen und zur ausgewählten benutzerbezogenen Karte zu übertragen, um den Zugriff auf die PIN- oder Passwort geschützte Karte freizugeben.

Um dem Kunden die Installierung und Anmeldung seiner Karten an dem Karten-Verwaltungseinrichtung zu erleichtern, kann die Karten-Verwaltungseinrichtung dazu ausgebildet sein, automatisch eine in einen Kartenleser eingesetzte benutzerbezogene Karten zu identifizieren und automatisch eine Zuordnung zwischen der identifizierten Karte und dem jeweiligen Kartenleser herzustellen. Auf diese Weise findet die Karten-Verwaltungseinrichtung den Kartenleser, in den eine ausgewählte Karte eingesteckt ist.

Die Sicherheit bei der Verwendung von nutzerbezogenen Karten kann dadurch erhöht werden, dass die Karten-Verwaltungseinrichtung einen Kartenscanner aufweist, der dazu ausgebildet ist, wenigstens einen vorbestimmten Bereich einer zu installierenden benutzerbezogenen Karte zu scannen. Die Sicherheitseinrichtung der Karten-Verwaltungseinrichtung ist dazu ausgebildet, unter Ansprechen auf den wenigstens einen eingescannten Bereich die Echtheit der zu installierenden Karte zu prüfen und zu bestätigen und/oder den eingescannten Bereich mit einer digitalen Identität zu signieren.

Gemäß einer vorteilhaften Ausführungsform ist eine kartenbasierte Anwendung in der Kommunikations-Endeinrichtung installiert.

In einer weiteren vorteilhaften Ausführungsform ist die nutzerbezogene Kommunikations-Endeinrichtung als mobile Kommunikations-Endeinrichtung ausgebildet, welche wenigstens eine drahtlose Kurzstrecken-Kommunikationsschnittstelle aufweist. Bei der drahtlosen Kurzstrecken-Kommunikationsschnittstelle kann es sich um eine Kommunikationsschnittstelle gemäß dem NFC (near field communication) Standard oder dem Bluetooth Standard handeln. Weiterhin ist wenigstens eine dem Anbieter einer kartenbasierten Anwendung bzw. dem Betreiber eines kartenbasierten Systems, zum Beispiel eines Kreditinstituts, zugeordnete Kartenleseeinrichtung vorgesehen. Die Kartenleseeinrichtung kann einen herkömmlichen Kartenleser oder ein Kartenterminal enthalten.

Die Kartenleseeinrichtung des Anbieters weist wenigstens eine drahtlose Kurzstrecken-Kommunikationsschnittstelle und/oder eine kontaktbehaftete Kommunikationsschnittstelle auf, an welche ein Adapter mit einer drahtlosen Kurzstrecken-Kommunikationsschnittstelle anschließbar ist.

Die Kartenleseeinrichtung ist dazu ausgebildet, mit der wenigstens einen drahtlosen Kurzstrecken-Kommunikationsschnittstelle der Kommunikations-Endeinrichtung zu kommunizieren. Weiterhin ist die Kartenleseeinrichtung zum Ausführen einer kartenbasierten Anwendung ausgebildet. Die Karten-Zugriffsanwendung der mobilen Kommunikations-Endeinrichtung ist dazu ausgebildet, mittels der ersten programmierbaren Steuereinrichtung eine Kommunikation zwischen der von der Kartenleseeinrichtung ausgeführten kartenbasierten Anwendung und einer in der Karten-Verwaltungseinrichtung ausgewählten Karte zu steuern.

Die Sicherheit bei der Benutzung von in der Karten-Verwaltungseinrichtung installierten Karten kann dadurch erhöht werden, dass die Sicherheitseinrichtung der Karten-Verwaltungseinrichtung dazu ausgebildet ist, den Aufbau einer sicheren und ggf. zertifizierten Verbindung, insbesondere einer Internetverbindung zur Kommunikations-Endeinrichtung zu steuern.

Das oben genannte technische Problem wird ebenfalls durch eine Kommunikations-Endeinrichtung gemäß Anspruch 15, welche zum Einsatz in einem kartenbasierten System ausgebildet ist, gelöst.

Weiterhin wird das oben genannte technische Problem durch eine Karten-Verwaltungseinrichtung gemäß Anspruch 16, welche zum Einsatz in einem solchen kartenbasierten System ausgebildet ist, gelöst.

Das oben genannte technische Problem wird zudem durch ein Computerprogramm gemäß Anspruch 17 gelöst, welches eine Vielzahl von Anweisungen enthält, die in einer Benutzer bezogenen Kommunikations-Endeinrichtung und in einer Benutzer bezogenen Karten-Verwaltungseinrichtung eines kartenbasierten Systems speicherbar sind, wobei die Anweisungen, wenn sie von einer programmierbaren Steuereinrichtung der Kommunikations-Endeinrichtung und von einer programmierbaren Steuereinrichtung der Karten-Verwaltungseinrichtung ausgelesen und verarbeitet werden, dass Verfahren zum Betreiben eines kartenbasierten Systems ausführen.

Die Erfindung wird nachfolgend anhand zweier Ausführungsbeispiele in Verbindung mit den Zeichnungen näher erläutert. Es zeigen:
- Fig. 1: ein beispielhaftes kartenbasiertes System mit einem Smartphone,
- Fig. 2: ein alternatives kartenbasiertes System mit einem stationären Endgerät.

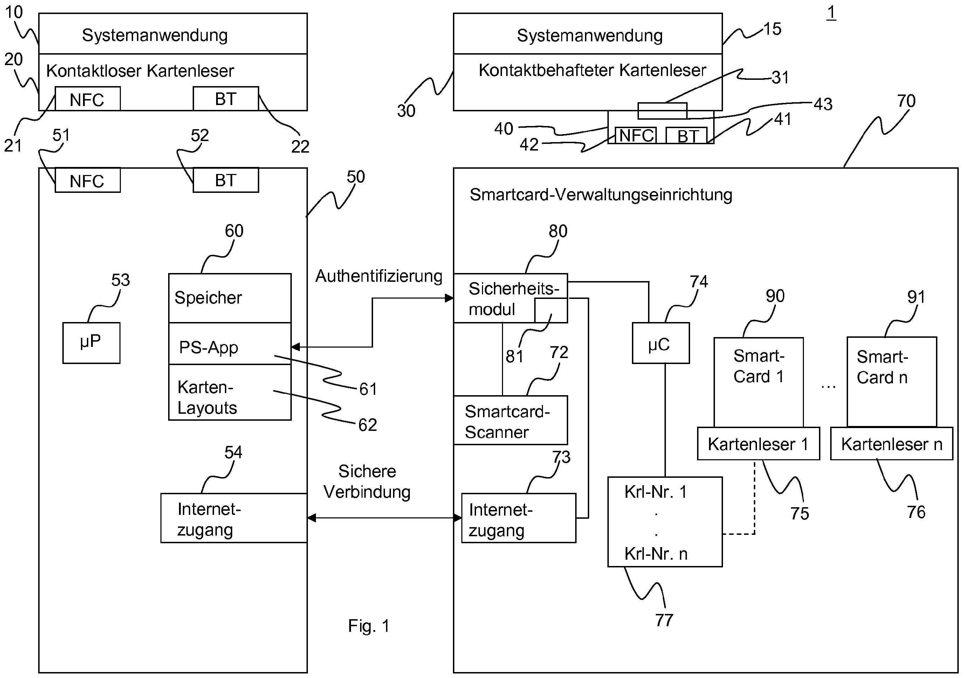

Figur 1 zeigt ein beispielhaftes kartenbasiertes System 1, welches im nachfolgend beschriebenen Beispiel ein Smartcard basiertes Bezahlsystem eines Kaufhauses ist. Der Betreiber des Kaufhauses hat beispielsweise eine Kartenleseeinrichtung 10 implementiert, die einen kontaktlosen Kartenleser 20 aufweist. In dem kontaktlosen Kartenleser 20 können beispielsweise zwei drahtlose Kurzstrecken-Kommunikationsschnittstellen, zum Beispiel eine Schnittstelle 21 gemäß dem NFC-Standard und eine weitere Kommunikationsschnittstelle 22 gemäß dem Bluetooth-Standard installiert. Eine weitere Kartenleseeinrichtung 15 kann im Kaufhaus aufgestellt sein, welche einen Kartenleser 30 mit einer kontaktbehafteten Schnittstelle 31 aufweist. Damit der kontaktbehaftete Kartenleser 30 mit Geräten, welche eine Kurzstrecken-Kommunikationsschnittstelle aufweisen, drahtlos kommunizieren kann, kann an die kontaktbehaftete Schnittstelle 31 des Kartenleser 30 ein Adapter 40 angeschlossen werden, der eine kontaktbehaftete Schnittstelle 43 zum Paaren mit dem kontaktbehafteten Kartenleser 30 aufweist. Zudem ist in dem Adapter 40 wenigstens eine drahtlose Kurzstrecken-Kommunikationsschnittstelle implementiert. Im vorliegenden Beispiel enthält der Adapter 40 sowohl eine Kurzstrecken-Kommunikationsschnittstelle 42 gemäß dem NFC-Standard als auch eine weitere Kurzstrecken-Kommunikationsschnittstelle 41 gemäß dem Bluetooth-Standard.

Das kartenbasierte System 1 umfasst weiterhin mindestens eine mobile, Internet taugliche Kommunikations-Endeinrichtung 50, die im vorliegenden Beispiel ein Smartphone ist. Dieses Smartphone 50 gehöre einem Benutzer. Neben den üblichen Funktionalitäten und Komponenten, wie z. B. eine SIM-Karte, weist das Smartphone 50 wenigstens eine drahtlose Kurzstrecken-Kommunikationsschnittstelle auf. Im vorliegenden Beispiel sind sowohl eine NFC-Kurzstrecken-Kommunikationsschnittstelle 51 als auch eine Bluetooth-Kurzstrecken-Kommunikationsschnittstelle 52 implementiert. Der Betrieb des Smartphones 50 wird von einer programmierbaren Steuereinrichtung 53, die als Mikroprozessor oder Mikrokontroller ausgebildet sein kann, überwacht und gesteuert. Weiterhin ist ein Speicher 60 vorgesehen, in dem eine Kommunikations- und Steuersoftware, die als Karten-Zugriffsanwendung 61 bezeichnet wird, abgelegt werden. Die Karten-Zugriffsanwendung 61 ist vorzugsweise als App programmiert. Diese Anwendung kann auch als private Smartcard-App bezeichnet werden. In dem Speicher 60 können weiterhin Kartensymbole, -layouts oder andere Kennzeichnungen verschiedener Karten, die dem Kunden des Smartphones 50 gehören, abgelegt werden. Zudem verfügt das Smartphone 50 über eine Netzzugangseinrichtung, die im vorliegenden Beispiel als Internet-Zugangseinrichtung 54 ausgebildet ist.

Des Weiteren umfasst das kartenbasierte System 1 eine Karten-Verwaltungseinrichtung 70, die nachfolgend Smartcard-Verwaltungseinrichtung 70 bezeichnet wird. Denn nachfolgend wird davon ausgegangen, dass es sich bei den kundenbezogenen Karten um verschiedene Smartcards handelt.

Die Smartcard-Verwaltungseinrichtung 70 ist ebenfalls dem Kunden des Smartphones 50 zugeordnet, und vorzugsweise in einem seiner Privaträume installiert. Die Smartcard-Verwaltungseinrichtung 70 ist vorzugsweise in einem Gehäuse angeordnet, welches nicht dargestellt ist. Die Smartcard-Verwaltungseinrichtung 70 kann mehrere Kartenleser 1 bis n aufweisen, von denen der Einfachheit halber lediglich die beiden Kartenleser 75 und 76 dargestellt sind. Bei den Kartenlesern 75 und 76 kann es sich um herkömmliche kontaktlose und/oder kontaktbehaftete Kartenleser handeln. Die Kartenleser 75 und 76 sind jeweils dazu ausgebildet, ein Hardwaremodul, im vorliegenden Beispiel eine Smartcard 90 bzw. 91 aufzunehmen und mit dem Chip der jeweiligen Smartcard zu kommunizieren.

Die Smartcard-Verwaltungseinrichtung 70 weist weiterhin eine Sicherheitseinrichtung 80 auf, die als einsetzbares Sicherheitsmodul ausgebildet sein kann. Wie nachfolgend noch näher ausgeführt wird, kann die Sicherheitseinrichtung 80 insbesondere dazu ausgebildet sein, die Karten-Verwaltungseinrichtung 70 zu individualisieren, eine Authentifizierung mit dem Smartphone 50 durchzuführen sowie eine sichere Verbindung zum Smartphone 50 aufzubauen. Hierzu weist die Smartcard-Verwaltungseinrichtung 70 ebenfalls eine Netzzugangseinrichtung 73 auf, die im vorliegenden Beispiel wiederum als Internet-Zugangseinrichtung ausgebildet ist.

Die Sicherheitseinrichtung 80 ist vorzugsweise dazu ausgebildet, eine sichere Internetverbindung zwischen der Smartcard-Verwaltungseinrichtung 70 und dem Smartphone 50 aufzubauen bzw. einzuleiten, um eine Kommunikation zwischen der Karten-Zugriffsanwendung 61 des Smartphones 50 und der Sicherheitseinrichtung 80 sowie unter Anderem eine Kommunikation zwischen der Karten-Zugriffsanwendung 61 und einer der in der Karten-Verwaltungseinrichtung 70 installierten Smartcards 90 und 91 durchzuführen.

Die Sicherheitsvorrichtung 80 kann einen Speicher 81 aufweisen, in welchem ein individueller, Kartenübergeordneter Identifizierungscode, beispielsweise in Form einer PIN oder eines Passwortes, abgelegt sein kann.

Weiterhin kann die Smartcard-Verwaltungseinrichtung 70 einen Smartcard-Scanner 72 aufweisen, der dazu ausgebildet ist, das Layout der Vorder- und/oder Rückseite einer zu installierenden benutzerbezogenen Karte zu scannen. Die Sicherheitseinrichtung 80 kann dazu ausgebildet sein, das eingescannte Layout der Vorder- und/oder Rückseite einer installierten Smartcard mit einer digitalen Signatur der Kartenverwaltungseinrichtung zu signieren. Hierzu kann die Sicherheitseinrichtung 80 eine der Karten-Verwaltungseinrichtung zugeordnete digitale Identität verwenden, die aus einem geheimen Schlüssel, einem öffentlichen Schlüssel und einem Zertifikat besteht. Die Echtheit der installierten Karte kann beispielsweise durch ein elektronisch verifizierbares Wasserzeichen in dem Layout der Kartenvorderseite und/oder Kartenrückseite bestätigt werden.

Die Funktionen der Smartcard-Verwaltungseinrichtung 70 werden von einer programmierbaren Steuereinrichtung 74, die als Mikroprozessor oder als Mikrokontroller ausgebildet sein kann, gesteuert und überwacht.

Da jede zu installierende Smartcard 90, 91 durch einen Identifizierungscode gesichert sein kann, der als PIN oder Passwort ausgebildet ist, kann ein sicherer Speicher 77 vorgesehen sein, in den der individuelle Identifizierungscode einer Smartcard nach deren Installation abgelegt werden kann.

Angemerkt sei, dass in dem Speicher 77 auch eine Zuordnungstabelle hinterlegt werden kann, die jeder installierten Smartcard einen Kartenleser zuordnet. Diese Zuordnung kann unter Steuerung des Mikrocontrollers 74 und/oder der Sicherheitseinrichtung 80 der Smartcard-Verwaltungseinrichtung 70 automatisch durchgeführt werden.

Die Smartcard-Verwaltungseinrichtung 70 kann ferner dazu ausgebildet sein, je nach Implementierung, bestimmte oder alle installierten Smartcards 90, 91 zu deaktivieren. Diese Aufgabe kann beispielsweise die Sicherheitseinrichtung 80 durchführen. In ähnlicher Weise ist denkbar, dass das Smartphone 50 beispielsweise mit Hilfe der Karten-Zugriffsanwendung 61 die Kommunikation zur Smartcard-Verwaltungseinrichtung 80 deaktivieren oder sperren kann. Auch die Karten-Verwaltungseinrichtung kann die Verbindung zur Kommunikationsendeinrichtung deaktivieren oder sperren. Beliebige Ereignisse können zu einer Deaktivierung oder Sperrung des Smartphones 50 und/oder der Smartcard-Verwaltungseinrichtung 70 führen. Ein Ereignis kann beispielsweise das Ablaufen einer eingestellten Verbindungszeit, das überschreiten einer vereinbarten Datenübertragungsmenge, das mehrmalige Auswählen einer nicht installierten Karte sein, das wiederholte eingeben einer falschen übergeordneten PIN.

Nachfolgend wird die Funktionsweise des in Fig. 1 beispielhaft gezeigten Smartcard-basierten Systems 1 näher erläutert.

Angenommen sei nunmehr, dass der Nutzer des Smartphones 50 über wenigstens zwei zertifizierte Smartcards 90 und 91 verfügt, welche er nicht mehr in seiner Geldbörse aufbewahren, sondern zentral in seiner Smartcard-Verwaltungseinrichtung 70 installieren möchte.

Der einfachen Erläuterung wegen sei angenommen, dass der Nutzer lediglich eine Bezahlkarte 90 des Betreibers des Kaufhauses sowie eine Signaturkarte 91 besitzt.

Um einen Kartenmissbrauch zu verhindern, muss im vorliegenden Beispiel der Nutzer zunächst die Bezahlkarte 90 und die Signaturkarte mittels des Smartcard-Scanners 72 einscannen. Die eingescannten Daten werden dann vom Smartcard-Scanner 72 beispielsweise zur Sicherheitseinrichtung 80 übertragen und dort unter Zuhilfenahme einer gespeicherten digitalen Identität signiert und gegebenenfalls vor oder nach der Signatur auf Echtheit geprüft.

Angemerkt sei, dass die eingescannten Layouts auch unter Zuhilfenahme einer digitalen Identität signiert werden können, die auf der jeweiligen Smartcard vorhanden ist und erst nach Eingabe der kartenindividuellen PIN an der Karten-Verwaltungseinrichtung 70 verwendet werden darf. Sollte die Smartcard diese Funktionalität nicht bereitstellen, so wird die digitale Identität der Kartenverwaltungseinrichtung verwendet.

Nach erfolgter Signatur der eingescannten Kartenlayouts der Smartcards 90 und 91 und gegebenenfalls nach erfolgreicher Prüfung der Smartcards 90 und 91 auf Echtheit gibt vorzugsweise die Sicherheitseinrichtung 80 und/oder der Mikrocontroller 74 die Karten-Verwaltungseinrichtung 70 zur Installation der beiden Smartcards 90 und 91 frei.

Zur Installation setzt der Nutzer nunmehr seine Bezahlkarte 90 in den Kartenleser 75 und seine Signaturkarte 91 in den Kartenleser 76 der Smartcard-Verwaltungseinrichtung 70 ein.

Bei der Installation wird unter Anderem eine Zuordnung zwischen der eingesetzten Smartcard und dem jeweiligen Kartenleser vorgenommen.

Diese Zuordnung kann manuell über ein Bedienfeld der Smartcard-Verwaltungseinrichtung 70, extern über einen an die Smartcard-Verwaltungseinrichtung 70 anschließbaren Rechner oder sogar automatisch von der Smartcard-Verwaltungseinrichtung 70 selbst vorgenommen werden. Wir betrachten nachfolgend die Installation über einen extern angeschlossenen Rechner (nicht dargestellt).

Hierzu gibt der Nutzer beispielsweise die PIN der Smartcard 90, die Nummer des Kartenlesers 75, in welchen die Smartcard 90 eingesetzt worden ist, und einen die Bezahlkarte 90 repräsentierenden Code ein, der später beim Auffinden einer am Smartphone 50 ausgewählten Smartcard benötigt wird. Die PIN der Smartcard 90 wird vorzugsweise im Speicher 81 der Sicherheitseinrichtung 80 gespeichert, während die Nummer des Kartenlesers 75 und der die Bezahlkarte repräsentierende Code im Speicher 77 hinterlegt werden. In ähnlicher Weise werden die entsprechenden Daten für die Smartcard 91 und den Kartenleser 76 im Speicher 81 der Sicherheitseinrichtung 80 und im Speicher 77 abgelegt. Ferner sorgt der Nutzer dafür, dass in seinem Smartphone 50 neben den Symbolen der installierten Smartcards 90 und 91 auch die jeweiligen Codes zum Beispiel im Speicher 60 abgelegt werden.

Nunmehr sei angenommen, dass der Nutzer des Smartphones 50 vor der Kartenleseeinrichtung 10 des Kaufhauses steht und mittels seiner Bezahlkarte 90 am Kartenleser 20 bezahlen möchten. Der Kunde gibt nunmehr einen Bezahlwunsch, mit der Smartcard 90 zahlen zu wollen, an seinem Smartphone 50 ein, der vom Mikroprozessor 53 dahingehend verstanden wird, die Karten-Zugriffsanwendung 61 zu aktivieren.

Je nach Implementierung kann die Karten-Zugriffsanwendung 61 unter Steuerung des Mikroprozessors 53 nunmehr ein IP-Paket, welches die IP-Adresse der Karten-Verwaltungseinrichtung 70, die IP-Adresse des Smartphones 50 und den Bezahlwunsch des Nutzers, mit der Smartcard 90 zahlen zu wollen, enthalten kann, über eine Internetverbindung zur Internet-Zugangseinrichtung 73 übertragen, die das IP-Paket beispielsweise dem Sicherheitsmodul 80 übergibt. Dieses IP-Paket kann vom Sicherheitsmodul 80 als Wake-Up-Befehl interpretiert werden. Unter Ansprechen auf den empfangenen Bezahlwunsch baut die Smartcard-Verwaltungseinrichtung 70 unter Verwendung der IP-Adresse des Smartphones 50 über den Internetzugang 73 eine sichere Internetverbindung beispielsweise in Form eines TLS-Kanals zur Internet-Zugangseinrichtung 54 des Smartphones 50 auf. Anschließend wird ein Authentifizierungsverfahren zwischen der Sicherheitseinrichtung 80 und der Karten-Zugriffsanwendung 61 durchgeführt, um den Kunden bzw. das Smartphone 50 zu authentifizieren. Das Authentifizierungsverfahren wird vorzugsweise von der Sicherheitseinrichtung 80 gesteuert. Grundsätzlich können verschiedene an sich bekannte Authentisierungsverfahren wie zum Beispiel eine Authentisierung über OneTimePassword (OTP) angewendet werden.

Nach erfolgreicher Authentifizierung wird entweder die gewünschte Karte, hier die Smartcard 90, ausgewählt, oder der Kunde kann beispielsweise von der Karten-Zugriffsanwendung 61 aufgefordert werden, eine Smartcard an seinem Smartphone 50 auszuwählen. Um die Auswahl für den Nutzer zu erleichtern, können von der Karten-Zugriffsanwendung 61 die für die installierten Smartcards 90 und 91 hinterlegten Symbole oder die im Speicher 77 hinterlegten signierten Layoutdateien auf dem Display des Smartphones 50 angezeigt werden, die zuvor von der Karten-Verwaltungseinrichtung 70 über die sichere Verbindung zum Smartphone 50 übertragen worden sind. Nunmehr wählt der Nutzer an seinem Smartphone 50 das Symbol der Bezahlkarte 90 aus. Die Karten-Zugriffsanwendung 61 sorgt anschließend dafür, dass der zu dem ausgewählten Symbol gehörende Code über die sichere Internet-Verbindung vorzugsweise zur Sicherheitseinrichtung 80 übertragen wird. Je nach Implementierung kann der Nutzer von der Karten-Zugriffsanwendung 61 oder der Sicherheitseinrichtung 80 zusätzlich aufgefordert werden, die PIN der ausgewählten Smartcard, im erläuterten Beispiel die PIN der Bezahlkarte 90 einzugeben, um die Bezahlkarte 90 für den Bezahlverkehr aktivieren zu können. Besteht bereits eine Kommunikationsverbindung zwischen der Kartenleseeinrichtung 10 und dem Smartphone 50, kann der Nutzer auch von der Kartenleseeinrichtung 10 bzw. von der darin installierten kartenbasierten Anwendung aufgefordert werden, die PIN der ausgewählten Bezahlkarte 90 einzugeben.

Der Nutzer weiß jedoch, dass seiner Karten-Verwaltungseinrichtung 70 eine übergeordnete PIN zugeordnet ist, die er jetzt anstelle der PIN der Bezahlkarte 90 an seinem Smartphone 50 eingibt.

Angemerkt sei, dass es auch Karten geben kann, bei denen man keine übergeordnete PIN verwenden kann, da die Kartenanwendung die PIN verschlüsselt überträgt. Aus diesem Grund muss der Nutzer signalisiert bekommen, ob die Anwendung die übergeordnete PIN unterstützt.

Die Karten-Zugriffsanwendung 61 veranlasst nun die Übertragung der übergeordneten PIN zur Sicherheitseinrichtung 80. Die Sicherheitseinrichtung 70 ist in der Lage, die empfangene übergeordnete PIN zu prüfen, anhand des bereits empfangenen Codes, der die Bezahlkarte 90 repräsentiert, den Kartenleser 75, in welchem die Bezahlkarte 90 steckt, zu identifizieren und die PIN der ausgewählten Bezahlkarte 90 zu der Bezahlkarte 90 zu übertragen. Den Kartenleser 75 findet die Sicherheitseinrichtung 80 beispielsweise dadurch, dass sie die zum empfangenen Code gehörende Nummer des Kartenlesers 75 aus dem Speicher 77 ausliest.

Dank dieser besonderen PIN-Verwaltung braucht der Kunde sich nicht die PIN-Nummern der installierten Smartcards 90 und 91, sondern lediglich die Karten-übergeordnete PIN der Sicherheitseinrichtung 80 zu merken.

Angenommen sei, dass der Nutzer lediglich die NFC-Schnittstelle 51 seines Smartphones 50 aktiviert hat. Deshalb wird, sobald der Nutzer sein Smartphone 50 vor den kontaklosen Kartenleser 20 legt, in an sich bekannter Weise eine NFC-Verbindung zwischen der NFC-Schnittstelle 21 des kontaktlosen Kartenlesers 20 und der NFC-Schnittstelle 51 des Smartphones 50 hergestellt.

Die beispielsweise in der Kartenleseeinrichtung 10 abgelegte Bezahlanwendung kann nunmehr unter Steuerung der im Smartphone 50 installierten Karten-Zugriffsanwendung 61 in Verbindung mit dem Mikroprozessor 53 über das Smartphone 50 und die sichere Internet-Verbindung mit der in der Smartcard-Verwaltungseinrichtung 70 installierten Smartcard 90 kommunizieren. Aus Sicht der in der Kartenleseeinrichtung 10 abgelegten Bezahlanwendung entsteht somit der Eindruck, dass die Bezahlanwendung bzw. die Kartenleseeinrichtung 10 in herkömmlicher Weise unmittelbar mit der Bezahlkarte 90 kommuniziert. Mit anderen Worten verlängert das Smartphone 50 mit Hilfe der Karten-Zugriffsanwendung 61 quasi nur die Kommunikationsschnittstelle der Smartcard 90.

Steht der Nutzer des Smartphones 50 nicht vor der Kartenleseeinrichtung 10, sondern vor der Kartenleseeinrichtung 15, erfolgt die Kurzstrecken-Funkkommunikation mit dem kontaktbehafteten Kartenleser 31 beispielsweise über die NFC-Schnittstelle 51 des Smartphones 50 und die NFC-Schnittstelle 42 des Adapters 40.

Je nach Implementierung kann beispielsweise der Mikroprozessor 53 des Smartphones 50 in Verbindung mit der Karten-Zugriffsanwendung das Ende des Bezahlvorgangs erkennen. Der Mikroprozessor 53 kann dazu ausgebildet sein, unter Ansprechen auf das erkannte Ende des Bezahlvorgangs die drahtlose Kurzstreckenverbindung zwischen dem kontaktlosen Kartenleser 20 und dem Smartphone 50 und/oder die sichere Internet-Verbindung zwischen dem Smartphone 50 und der Smartcard-Verwaltungseinrichtung 70 zu beenden. Auf diese Weise wird sichergestellt, dass kein Missbrauch mit der in der Smartcard-Verwaltungseinrichtung 70 installierten Smartcard 90 betrieben werden kann.

Um einem Missbrauch der Smartcard-Verwaltungseinrichtung 70 vorzubeugen, kann ferner vorgesehen sein, dass die im Smartphone 50 gespeicherte Karten-Zugriffsanwendung 61 mittels des Mikroprozessors 53 die sichere Internet-Verbindung deaktiviert, wenn die übergeordnete PIN der Sicherheitseinrichtung 80 mehrmals falsch eingegeben worden ist.

Dank der Verwendung der Smartcard-Verwaltungseinrichtung 70 können auch kontaktbehaftete Smartcards verwendet werden. Hierzu ist lediglich ein Kartenleser mit kontaktbehafteten Schnittstellen in der Smartcard-Verwaltungseinrichtung 70 zu implementieren. Die kontaktlose Kommunikation der kontaktbehafteten Smartcard mit der Kartenleseeinrichtung 10 erfolgt dann wiederum über das Smartphone 50.

Zudem erleichtert die Smartcard-Verwaltungseinrichtung 70 den Austausch alter Smartcards durch neue, vom Betreiber herausgegebene Smartcards. Hierzu muss der Nutzer lediglich die alte Smartcard aus seiner Smartcard-Verwaltungseinrichtung 70 entfernen und die neue, Smartcard einstecken und initialisieren.

Angemerkt sei an dieser Stelle, dass die in dem kontaktlosen Kartenleser 20 oder dem Smartphone 50 implementierten Kurzstrecken-Kommunikationsschnittstellen beispielsweise als Software-Schnittstelle in Form einer Applikation Programming Interface (API) implementiert sein können.

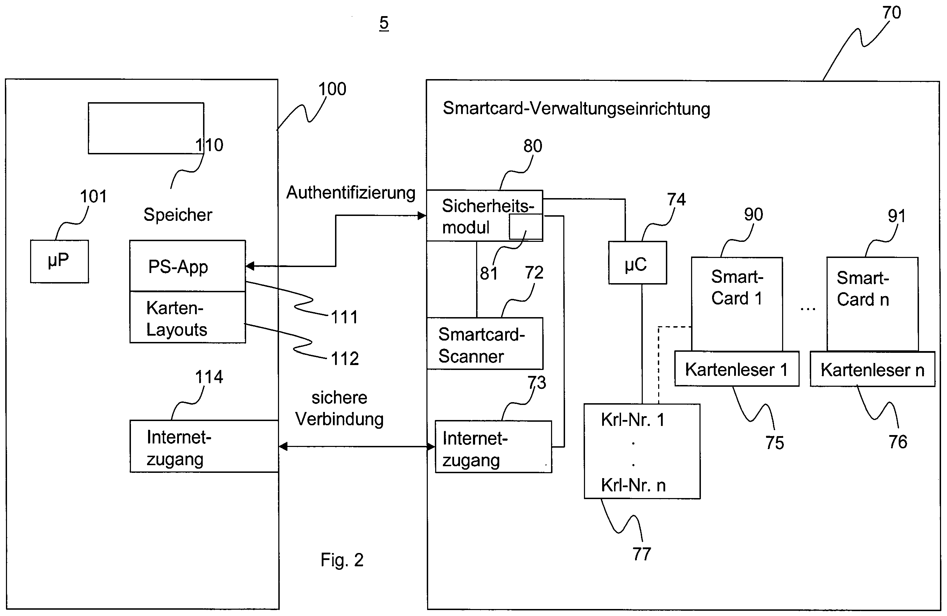

Nunmehr wird ein zweites Ausführungsbeispiel eines Smartcard-basierten Systems 5 erläutert, dass in Fig. 2 dargestellt ist.

Das in Fig. 2 gezeigte Smartcard-basierte System 5 unterscheidet sich von dem in Fig. 1 dargestellten Smartcard-basierten System 1 dadurch, dass die verwendete, Internet taugliche Kommunikations-Endeinrichtung 100 über keine drahtlosen Kurzstrecken-Kommunikationsschnittstellen verfügt. Vorzugsweise wird es sich bei der Kommunikations-Endeinrichtung auch nicht um eine mobile Kommunikations-Endeinrichtung wie einem Smartphone, sondern beispielsweise um ein Laptop oder einen stationären PC handeln, welcher nicht zur Benutzung an Kartenautomaten geeignet ist.

Ähnlich dem in Fig. 1 gezeigten Smartphone 50 kann die Kommunikations-Endeinrichtung 100 einen Speicher 110 aufweisen, in dem eine Karten-Zugriffsanwendung 111, die Kartensymbole 112 der Smartcards 90 und 91 und ferner wenigstens eine kartenbasierte Anwendung hinterlegt sind. Weiterhin verfügt die Kommunikations-Endeinrichtung 100 über eine Netzzugangseinrichtung 114, die im vorliegenden Beispiel als Internet-Zugangseinrichtung ausgebildet ist, um der Kommunikations-Endeinrichtung 100 einen Zugang zum Internet zu ermöglichen. Eine programmierbare Steuereinrichtung, beispielsweise in Form eines Mikroprozessors 101 steuert und überwacht die Funktion der Kommunikations-Endeinrichtung 100.

Die in Fig. 2 gezeigte Smartcard-Verwaltungseinrichtung 70 entspricht vorzugsweise der in Fig. 1 gezeigten Smartcard-Verwaltungseinrichtung, sodass auf die einzelnen Bauteile nicht mehr näher eingegangen werden muss. Wie das Smartphone 50 kann die Kommunikations-Endeinrichtung 100 mit der Smartcard-Verwaltungseinrichtung 70 kommunizieren.

Angenommen sei nunmehr, dass die in der Kommunikations-Endeinrichtung 100 abgelegte kartenbasierte Anwendung eine Signaturanwendung ist, mit der der Nutzer ein in der Kommunikations-Endeinrichtung 100 gespeichertes Dokument signieren möchte.

Um Wiederholungen zu vermeiden sei angenommen, dass die Smartcard-Verwaltungseinrichtung 70 und die Kommunikations-Endeinrichtung 100 wie zuvor hinsichtlich des Smartcard basierten Systems 1 beschrieben, installiert worden sind. Das heißt die Symbole der Smartcards 90 und 91 sowie die dazugehörenden Codes sind in der Kommunikations-Endeinrichtung 100 gespeichert, während die PIN-Nummern der Smartcards 90 und 91 in der Sicherheitseinrichtung 80 und die Nummern der Kartenleser 75 und 76 sowie die den Kartensymbolen zugeordnete Codes im Speicher 77 abgelegt sind.

Zur Signatur seines Dokumentes benötigt der Nutzer nunmehr einen Zugriff der Kommunikations-Endeinrichtung 100 auf die Signaturkarte 91, welche im Kartenleser 76 seiner Smartcard-Verwaltungseinrichtung 70 steckt.

Je nach Implementierung kann die Karten-Zugriffsanwendung 111 unter Steuerung des Mikroprozessors 101 nunmehr ein IP-Paket, welches die IP-Adresse der Karten-Verwaltungseinrichtung 70, die IP-Adresse der Kommunikations-Endeinrichtung 100 und den Signaturwunsch des Nutzers enthält, über eine Internetverbindung zur Internet-Zugangseinrichtung 73 übertragen, die das IP-Paket beispielsweise dem Sicherheitsmodul 80 übergibt. Unter Ansprechen auf den empfangenen Signaturwunsch baut die Smartcard-Verwaltungseinrichtung 70 unter Verwendung der IP-Adresse der Kommunikations-Endeinrichtung 100 über den Internetzugang 73 eine sichere Internetverbindung beispielsweise in Form eines TLS-Kanals zur Internet-Zugangseinrichtung 114 der Kommunikations-Endeinrichtung 100 auf. Anschließend wird ein Authentifizierungsverfahren zwischen der Sicherheitseinrichtung 80 und der Karten-Zugriffsanwendung 111 durchgeführt, um den Kunden bzw. die Kommunikations-Endeinrichtung 100 zu authentifizieren. Das Authentifizierungsverfahren wird vorzugsweise von der Sicherheitseinrichtung 80 gesteuert.

Nach erfolgreicher Authentifizierung kann der Kunde beispielsweise von der Karten-Zugriffsanwendung 111 aufgefordert werden, eine Smartcard an seiner Kommunikations-Endeinrichtung 100 auszuwählen. Um die Auswahl für den Nutzer zu erleichtern, können von der Karten-Zugriffsanwendung 111 die für die installierten Smartcards 90 und 91 hinterlegten Symbole auf dem Display der Kommunikations-Endeinrichtung 100 angezeigt werden. Nunmehr wählt der Nutzer an seiner Kommunikations-Endeinrichtung 100 das Symbol der Signaturkarte 91 aus. Die Karten-Zugriffsanwendung 111 sorgt anschließend dafür, dass der zu dem ausgewählten Symbol gehörende Code über die sichere Internet-Verbindung vorzugsweise zur Sicherheitseinrichtung 80 übertragen wird. Je nach Implementierung kann der Nutzer von der Karten-Zugriffsanwendung 111 oder der Sicherheitseinrichtung 80 zusätzlich aufgefordert werden, die PIN der ausgewählten Smartcard, im erläuterten Beispiel die PIN der Signaturkarte 91 einzugeben, um die Signaturkarte 91 für den Signaturvorgang aktivieren zu können.

Der Nutzer weiß jedoch, dass seiner Karten-Verwaltungseinrichtung 70 eine übergeordnete PIN zugeordnet ist, die er jetzt anstelle der PIN der Signaturkarte 91 an seiner Kommunikations-Endeinrichtung 100 eingibt. Die Karten-Zugriffsanwendung 111 veranlasst nun die Übertragung der übergeordneten PIN zur Sicherheitseinrichtung 80. Die Sicherheitseinrichtung 70 ist in der Lage, die empfangene übergeordnete PIN zu prüfen, anhand des bereits empfangenen Codes, der die Signaturkarte 91 repräsentiert, den Kartenleser 76, in welchem die Signaturkarte 91 steckt, zu identifizieren und die PIN der ausgewählten Signaturkarte 91 zu der Signaturkarte 90 zu übertragen. Den Kartenleser 76 findet die Sicherheitseinrichtung 80 dadurch, dass sie die zum empfangenen Code gehörende Nummer des Kartenlesers 76 aus dem Speichern 77 ausliest.

Die im Speicher 110 abgelegte Signaturanwendung kann nunmehr unter Steuerung der in der Kommunikations-Endeinrichtung 100 installierten Karten-Zugriffsanwendung 111 in Verbindung mit dem Mikroprozessor 101 über die Kommunikations-Endeinrichtung 100 und die sichere Internet-Verbindung mit der in der Smartcard-Verwaltungseinrichtung 70 installierten Smartcard 91 kommunizieren, um das Dokument zu signieren.

Je nach Implementierung kann beispielsweise der Mikroprozessor 101 der Kommunikations-Endeinrichtung 100 in Verbindung mit der Karten-Zugriffsanwendung 111 das Ende des Signaturvorgangs erkennen. Der Mikroprozessor 101 kann dazu ausgebildet sein, unter Ansprechen auf das erkannte Ende des Signaturvorgangs die sichere Internet-Verbindung zwischen der Kommunikations-Endeinrichtung 100 und der Smartcard-Verwaltungseinrichtung 70 zu beenden. Auf diese Weise wird sichergestellt, dass kein Missbrauch mit der in der Smartcard-Verwaltungseinrichtung 70 installierten Smartcard 91 betrieben werden kann.

Es ist offensichtlich, dass mit dem in Fig. 1 gezeigten Smartcard basierten System 1 und mit dem in Fig. 2 gezeigten Smartcard basierten System 5 alle auf dem Markt angebotenen und zukünftig noch zu implementierende Smartcard basierte Anwendungen ausgeführt werden können, ohne dass der Nutzer eine einzige Smartcard in seiner Geldbörse mit sich herumtragen muss. Es reicht aus, wenn die jeweilige Smartcard in einem Kartenleser der Smartcard-Verwaltungseinrichtung 70 installiert wird.

## Patentansprüche

1. Verfahren zum Betreiben eines kartenbasierten Systems (1, 5), welches eine kundenbezogene Kommunikations-Endeinrichtung (50, 100) und eine davon getrennte kundenbezogene Karten-Verwaltungseinrichtung (70), in welcher mehrere als Hardwaremodule ausgebildete kundenbezogene Karten (90, 91) installiert sind, aufweist, mit folgenden Schritten:
a) Herstellen einer sicheren Verbindung zwischen der Kommunikations-Endeinrichtung (50, 100) und der Karten-Verwaltungseinrichtung (70);
b) Ausführen einer Authentifizierung zwischen der Kommunikations-Endeinrichtung (50, 100) und der Karten-Verwaltungseinrichtung (70), um die Kommunikations-Endeinrichtung (50, 100) zu authentifizieren;
c) Auswählen, an der Kommunikations-Endeinrichtung (50, 100), einer Karte aus mehreren in der Karten-Verwaltungseinrichtung (70) installierten, als Hardwaremodule ausgebildeten kundenbezogenen Karten (90, 91); und
d) Ausführen einer kartenbasierten Anwendung, welche über die Kommunikations-Endeinrichtung (50, 100) und die sichere Verbindung mit der in Schritt c) ausgewählten, in der Karten-Verwaltungseinrichtung (70) installierten kundenbezogenen Karte (90, 91) kommuniziert.

2. Verfahren nach Anspruch 1,
**dadurch gekennzeichnet, dass**
der Karten-Verwaltungseinrichtung (70) ein individueller, übergeordneter Identifizierungscode zugeordnet wird,
die installierten kundenbezogene Karten (90, 91) jeweils durch einen individuellen Identifizierungscode, welche in der Karten-Verwaltungseinrichtung (70) gespeichert werden, geschützt sind, und dass
an der Kommunikations-Endeinrichtung (50, 100) der individuelle übergeordnete Identifizierungscode der Karten-Verwaltungseinrichtung (70) eingegeben und anschließend zur Karten-Verwaltungseinrichtung (70) übertragen wird, welche der ausgewählten Karten (90, 91) den ihr zugeordneten, individuellen Identifizierungscode zuführt.

3. Verfahren nach einem der vorstehenden Ansprüche, **dadurch gekennzeichnet, dass**
die in der Karten-Verwaltungseinrichtung (70) installierten kundenbezogenen Karten auf der Kommunikations-Endeinrichtung (50, 100) in vorbestimmter Weise angezeigt werden.

4. Verfahren nach einem der vorstehenden Ansprüche, **dadurch gekennzeichnet, dass**
wenigstens ein vorbestimmter Bereich jeder in der Karten-Verwaltungseinrichtung (70) zu installierenden kundenbezogenen Karte (90, 91) gescannt und die Echtheit der jeweiligen gescannten Karten von der Karten-Verwaltungseinrichtung (70) anhand des gescannten Bereichs geprüft wird.

5. Verfahren nach einem der vorstehenden Ansprüche, **dadurch gekennzeichnet, dass**
Schritt d) in der Kommunikations-Endeinrichtung (100) ausgeführt wird.

6. Verfahren nach einem der Ansprüche 1 bis 4,
**dadurch gekennzeichnet, dass**
die kundenbezogene Kommunikations-Endeinrichtung (50) eine mobile Kommunikations-Endeinrichtung ist, dass das kartenbasierte System (1) wenigstens eine Kartenleseeinrichtung (10, 15), welche dem Anbieter einer kartenbasierten Anwendung zugeordnet ist, aufweist, dass
Schritt d) in der dem Anbieter zugeordneten Einrichtung (10) ausgeführt wird, und dass vor Ausführung des Schrittes d) eine drahtlose Kurzstreckenverbindung zwischen der Kartenleseeinrichtung (10, 15) des Anbieters und der kundenbezogenen, mobilen Kommunikations-Endeinrichtung aufgebaut wird.

7. Verfahren nach einem der vorstehenden Ansprüche, **dadurch gekennzeichnet, dass**
die in der Karten-Verwaltungseinrichtung (70) zu installierenden Karten vorab zertifiziert werden, und/oder dass
in Schritt a) die sichere Verbindung zertifiziert wird, und/oder dass
die sichere Verbindung eine Internetverbindung ist.

8. Karten-Verwaltungseinrichtung, welche zum Einsatz in einem Verfahren nach einem der Ansprüche 1 bis 7 ausgebildet ist, umfassend
mehrere kontaktlose und/oder kontaktbehaftete Kartenleser (75, 76), die jeweils zur Aufnahme und zum Lesen einer als Hardwaremodul ausgebildeten nutzerbezogenen Karte (90, 91) ausgebildet sind, eine zweite programmierbare Steuereinrichtung (74), eine Sicherheitseinrichtung (80), und
eine Netzzugangseinrichtung (73),
wobei die Sicherheitseinrichtung (80) und eine Karten-Zugriffsanwendung (61) einer einem Nutzer zugeordneten Kommunikations-Endeinrichtung (50, 100) dazu ausgebildet sind, eine Authentifizierung zwischen der Kommunikations-Endeinrichtung (50, 100) und der Karten-Verwaltungseinrichtung (70) durchzuführen, um die Kommunikations-Endeinrichtung (50, 100) zu authentifizieren,
wobei die Sicherheitseinrichtung (80) dazu ausgebildet ist, den Aufbau einer sicheren Verbindung zur Kommunikations-Endeinrichtung (50, 100) zu steuern, wobei die Karten-Zugriffsanwendung (61, 111) dazu ausgebildet ist, mittels der ersten programmierbaren Steuereinrichtung (53, 101) eine in der Karten-Verwaltungseinrichtung (70) installierte nutzerbezogene Karte (90, 91) auszuwählen und die Kommunikation zwischen einer kartenbasierten Anwendung und der ausgewählten nutzerbezogenen Karte (90, 91) über eine aufgebaute, sichere Verbindung zu steuern.

9. Kartenbasiertes System (1, 5) umfassend
- eine einem Nutzer zugeordnete Kommunikations-Endeinrichtung (50, 100) mit folgenden Merkmalen:
eine in der Kommunikations-Endeinrichtung (50, 100) installierte Karten-Zugriffsanwendung (61, 111),
eine erste programmierbare Steuereinheit (53, 101), und
eine Netzzugangseinrichtung (54, 114),
- eine dem Nutzer zugeordnete Karten-Verwaltungseinrichtung (70) nach Anspruch 8.

10. Kartenbasiertes System nach Anspruch 9,
**dadurch gekennzeichnet, dass**
in der Sicherheitseinrichtung (80, 81) ein übergeordneter Identifizierungscode zur Individualisierung der Karten-Verwaltungseinrichtung (70) abgelegt ist, dass
die in der Karten-Verwaltungseinrichtung (70) installierten nutzerbezogenen Karten (90, 91) jeweils durch einen individuellen Identifizierungscode gesichert sind, welche in einem Speicher (77) der Karten-Verwaltungseinrichtung (70) gespeichert werden, wobei die Karten-Zugriffsanwendung (61, 111) der Kommunikations-Endeinrichtung (50, 100) dazu ausgebildet ist, den Nutzer aufzufordern, den übergeordneten Identifizierungscode einzugeben, und wobei die
Karten-Verwaltungseinrichtung (70) dazu ausgebildet ist, unter Ansprechen auf den von der Kommunikations-Endeinrichtung (50, 100) empfangenen übergeordneten Identifizierungscode den individuellen Identifizierungscode der ausgewählten benutzerbezogenen Karte (90, 91) aus dem Speicher (77) auszulesen und zur ausgewählten benutzerbezogenen Karte zu übertragen.

11. Kartenbasiertes System nach Anspruch 9 oder 10, **dadurch gekennzeichnet, dass**
die Karten-Verwaltungseinrichtung (70) dazu ausgebildet ist, eine in einen Kartenleser (75, 76) eingesetzte benutzerbezogene Karte (90, 91) zu identifizieren und eine Zuordnung zwischen der identifizierten Karte (90, 91) und dem jeweiligen Kartenleser (75, 76) herzustellen.

12. Kartenbasiertes System, nach einem der Ansprüche 9 bis 11,
**dadurch gekennzeichnet, dass**
die Karten-Verwaltungseinrichtung (70) einen Kartenscanner (72) aufweist, der dazu ausgebildet ist, wenigstens einen vorbestimmten Bereich einer zu installierenden benutzerbezogenen Karte (90, 91) zu scannen, und dass
die Sicherheitseinrichtung (80) dazu ausgebildet ist, unter Ansprechen auf den wenigstens einen eingescannten Bereich die Echtheit der zu installierenden Karte (90, 91) zum prüfen und/oder den wenigstens einen eingescannten Bereich mit einer digitalen Identität zu signieren.

13. Kartenbasiertes System nach einem der Ansprüche 9 bis 12,
**dadurch gekennzeichnet, dass**
in der Kommunikations-Endeinrichtung (100) eine kartenbasierte Anwendung installiert ist.

14. Kartenbasiertes System nach einem der Ansprüche 9 bis 13,
**dadurch gekennzeichnet, dass**
die nutzerbezogene Kommunikations-Endeinrichtung (50) eine mobile Kommunikations-Endeinrichtung ist, die wenigstens eine drahtlose Kurzstrecken-Kommunikationsschnittstelle (51, 52) aufweist, dass wenigstens eine dem Anbieter einer kartenbasierten Anwendung zugeordnete Kartenleseeinrichtung (10, 20; 15; 25) vorgesehen ist, wobei die Kartenleseeinrichtung (10, 20; 15, 25) des Anbieters wenigstens eine drahtlose Kurzstrecken-Kommunikationsschnittstelle (21, 22) und/oder eine kontaktbehaftete Kommunikationsschnittstelle (31), an welche ein Adapter (40) mit einer drahtlosen Kurzstrecken-Kommunikationsschnittstelle (41, 42) anschließbar ist, aufweist und dazu ausgebildet ist, mit der wenigstens einen drahtlosen Kurzstrecken-Kommunikationsschnittstelle (51, 52) der Kommunikations-Endeinrichtung (50) zu kommunizieren, dass
die dem Anbieter zugeordnete Einrichtung (10) zum Ausführen einer kartenbasierten Anwendung ausgebildet ist, und dass
die Karten-Zugriffsanwendung (61) der mobilen Kommunikations-Endeinrichtung (50) dazu ausgebildet ist, mittels der ersten programmierbaren Steuereinrichtung (53) die Kommunikation zwischen der von der Einrichtung (10) des Anbieters ausgeführten kartenbasierten Anwendung und einer in der Karten-Verwaltungseinrichtung (70) ausgewählten benutzerbezogenen Karte (90) über eine Kurzstreckenverbindung zwischen dem Kartenleser (20, 25) des Anbieters und der Kommunikations-Endeinrichtung (50) und über eine sichere Verbindung steuern.

15. Kartenbasiertes System nach einem der Ansprüche 9 bis 13,
**dadurch gekennzeichnet, dass**
die Sicherheitseinrichtung (80) dazu ausgebildet ist, den Aufbau einer sicheren und ggf. zertifizierten Verbindung zur Kommunikations-Endeinrichtung (50, 100) zu steuern.

16. Kartenbasiertes System nach einem der Ansprüche 9 bis 15,
**dadurch gekennzeichnet, dass**
die nutzerbezogenen Karten (90, 91) Chipkarten sind und/oder dass
die Netzzugangseinrichtung (54, 114) der Kommunikations-Endeinrichtung (50, 100) und die Netzzugangseinrichtung (73) der dem Nutzer zugeordneten Karten-Verwaltungseinrichtung (70) jeweils eine Internet-Zugangseinrichtung sind.

17. Computerprogramm
enthaltend eine Vielzahl von Anweisungen, die in einer benutzerbezogenen Kommunikations-Endeinrichtung (50, 100) und in einer benutzerbezogenen Karten-Verwaltungseinrichtung (70) eines kartenbasierten Systems speicherbar sind, wobei die Anweisungen, wenn sie von einer programmierbaren Steuereinrichtung (53, 101) der Kommunikations-Endeinrichtung (50, 100) und einer programmierbaren Steuereinrichtung (74) der Karten-Verwaltungseinrichtung (70) ausgelesen und verarbeitet werden, das Verfahren nach einem der Ansprüche 1 bis 7 ausführen.

## Claims

1. A method for operating a card-based system which comprises a customer-related communications terminal (50, 100) and, separated therefrom, a customer-related card administration device (70) in which a plurality of customer-related cards (90, 91) are installed, which are configured as hardware modules, the method comprising the steps of:
a) establishing a secure connection between the communications terminal (50, 100) and the card administration device (70);
b) performing an authentication between the communications terminal (50, 100) and the card administration device (70) in order to authenticate the communications terminal (50, 100);
c) selecting, at the communications terminal (50, 100), one card from a plurality of customer-related cards (90, 91) installed in the card administration device (70) and configured as hardware modules; and
d) executing a card-based application which communicates via the communications terminal (50, 100) and the secure connection with the customer-related card (90, 91) selected in step c), which is installed in the card administration device (70).

2. The method according to claim 1,
**characterized in that**
the card administration device (70) has associated therewith an individual superordinate identification code;
the installed customer-related cards (90, 91) are each protected by an individual identification code stored in the card administration device (70); and that the individual superordinate identification code of the card administration device (70) is input at the communications terminal (50, 100) and is then transferred to the card administration device (70) which supplies the selected card (90, 91) with the individual identification code associated therewith.

3. The method according to any one of the preceding claims, **characterized in that**
the customer-related cards installed in the card administration device (70) are displayed at the communications terminal (50, 100) in a predetermined manner.

4. The method according to any one of the preceding claims, **characterized in that**
at least one predetermined area of each customer-related card (90, 91) to be installed in the card administration device (70) is scanned, and the authenticity of the respective scanned cards is checked by the card administration device (70) on the basis of the scanned area.

5. The method according to any one of the preceding claims, **characterized in that**
step d) is performed in the communications terminal (100).

6. The method according to any one of claims 1 to 4, **characterized in that**
the customer-related communications terminal (50) is a mobile communications terminal; that
the card-based system (1) comprises at least one card reader device (10, 15) associated with the provider of a card-based application; that
step d) is performed in the device (10) associated with the provider; and that
prior to the execution of step d), a wireless short-distance connection is established between the card reader device (10, 15) of the provider and the customer-related mobile communications terminal.

7. The method according to any one of the preceding claims, **characterized in that**
the cards that are to be installed in the card administration device (70) are preliminarily certified; and/or that
in step a) the secure connection is certified; and/or that
the secure connection is an Internet connection.

8. A card administration device configured for use in a method according to any one of claims 1 to 7, comprising:
a plurality of contactless and/or contact-connected card reader devices (75, 76) each one adapted for receiving and reading a user-related card (90, 91) that is configured as a hardware module;
a second programmable control device (74);
a security device (80); and
a network access device (73);
wherein the security device (80) and a card access application (61) of a communications terminal (50, 100) associated with a user are adapted to perform an authentication between the communications terminal (50, 100) and the card administration device (70) in order to authenticate the communications terminal (50, 100);
wherein the security device (80) is adapted to control the establishing of a secure connection to the communications terminal (50, 100);
wherein the card access application (61, 111) is adapted to select a user-related card (90, 91) installed in the card administration device (70) by means of the first programmable control device (53, 101) and to control the communication between a card-based application and the selected user-related card (90, 91) via an established secure connection.

9. A card-based system (1, 5), comprising:
- a communications terminal (50, 100) associated with a user, with the following features:
a card access application (61, 111) installed in the communications terminal (50, 100),
a first programmable control unit (53, 101), and
a network access device (54, 114);
- a card administration device (70) according to claim 8 associated with the user.

10. The card-based system according to claim 9,
**characterized in that**
the security device (80, 81) stores a superordinate identification code for individualisation of the card administration device (70); that
the user-related cards (90, 91) installed in the card administration device (70) are each secured by an individual identification code stored in a memory (77) of the card administration device (70);
wherein the card access application (61, 111) of the communications terminal (50, 100) is adapted to prompt the user to enter the superordinate identification code; and wherein
the card administration device (70) is adapted, in response to the superordinate identification code received from the communications terminal (50, 100), to retrieve the individual identification code of the selected user-related card (90, 91) from the memory (77) and to transmit it to the selected user-related card.

11. The card-based system according to claim 9 or 10, **characterized in that**
the card administration device (70) is adapted to identify a user-related card (90, 91) introduced into a card reader device (75, 76) and to generate an association between the identified card (90, 91) and the respective card reader device (75, 76).

12. The card-based system according to any one of claims 9 to 11,
**characterized in that**
the card administration device (70) comprises a card scanner (72) which is adapted to scan at least a predetermined area of a user-related card (90, 91) that is to be installed; and that
the security device (80) is adapted to check the authenticity of the card (90, 91) to be installed in response to the at least one scanned area, and/or to sign the at least one scanned area with a digital identity.

13. The card-based system according to any one of claims 9 to 12,
**characterized in that**
the communications terminal (100) has a card-based application installed therein.

14. The card-based system according to any one of claims 9 to 13,
**characterized in that**
the user-related communications terminal (50) is a mobile communications terminal that includes at least one wireless short-distance communication interface (51, 52); that
at least one card reader device (10, 20; 41, 42) is provided, which is associated with the provider of a card-based application, wherein the card reader device (10, 20; 41, 42) of the provider has at least one wireless short-distance communication interface (21, 22) and/or a contact-connected communication interface (31) to which an adapter (40) having a wireless short-distance communication interface (21, 22) is connectable, and is adapted to communicate with the at least one wireless short-distance communication interface (51, 52) of the communications terminal (50); that
the device (10) associated with the provider is adapted to execute a card-based application; and that the card access application (61) of the mobile communications terminal (50) is adapted to control, by means of the first programmable control device (53), the communication between the card-based application executed by the device (10) of the provider and a user-related card (90) selected in the card administration device (70) via a short-distance connection between the card reader (20, 25) of the provider and the communications terminal (50) and via a secure connection.

15. The card-based system according to any one of claims 9 to 13,
**characterized in that**
the security device (80) is adapted to control the establishing of a secure and optionally certified connection to the communications terminal (50, 100).

16. The card-based system according to any one of claims 9 to 15,
**characterized in that**
the user-related cards (90, 91) are chip cards; and/or that
the network access device (54, 114) of the communications terminal (50, 100) and the network access device (73) of the card administration device (70) associated with the user are each Internet access devices.

17. A computer program, comprising a plurality of instructions that can be stored in a user-related communications terminal (50, 100) and in a user-related card administration device (70) of a card-based system, wherein the instructions, when being retrieved and executed by a programmable control device (53, 101) of the communications terminal (50, 100) and a programmable control device (74) of the card administration device (70), perform the method according to any one of claims 1 to 7.

## Revendications

1. Procédé de fonctionnement d'un système (1, 5) basé sur une carte, lequel comprend un terminal de communication (50, 100) orienté client et un dispositif de gestion de carte (70) orienté client séparé de ce dernier, dans lequel plusieurs cartes (90, 91) orientées client réalisées sous la forme de modules matériels sont installées, comprenant les étapes suivantes consistant à :
a) établir une connexion sécurisée entre le terminal de communication (50, 100) et le dispositif de gestion de carte (70) ;
b) exécuter une authentification entre le terminal de communication (50, 100) et le dispositif de gestion de carte (70), afin d'authentifier le terminal de communication (50, 100) ;
c) sélectionner, sur le terminal de communication (50, 100), une carte parmi plusieurs cartes (90, 91) orientées client réalisées sous la forme d'un module matériel et installées dans le dispositif de gestion de carte (70) ; et
d) exécuter une application basée sur une carte, laquelle communique, par l'intermédiaire du terminal de communication (50, 100) et de la connexion sécurisée, avec la carte (90, 91) orientée client installée dans le dispositif de gestion de carte (70) choisie à l'étape c).

2. Procédé selon la revendication 1, **caractérisé en ce que** :
un code d'identification prioritaire individuel est associé au dispositif de gestion de carte (70),
les cartes (90, 91) orientées client installées sont protégées chacune par un code d'identification individuel, lesquels sont mis en mémoire dans le dispositif de gestion de carte (70), et **en ce que**
le code d'identification prioritaire individuel du dispositif de gestion de carte (70) est introduit sur le terminal de communication (50, 100) puis transmis au dispositif de gestion de carte (70), lequel amène le code d'identification individuel associé aux cartes (90, 91) sélectionnées.

3. Procédé selon l'une des revendications précédentes, **caractérisé en ce que** les cartes orientées client installées dans le dispositif de gestion de carte (70) sont affichées d'une manière prédéfinie sur le terminal de communication (50, 100).

4. Procédé selon l'une des revendications précédentes, **caractérisé en ce qu'**au moins une zone prédéfinie de chaque carte (90, 91) orientée client à installer dans le dispositif de gestion de carte (70) est balayée et l'authenticité de chaque carte balayée est contrôlée par le dispositif de gestion de carte (70) à l'aide de la zone balayée.

5. Procédé selon l'une des revendications précédentes, **caractérisé en ce que** l'étape d) est exécutée dans le terminal de communication (100).

6. Procédé selon l'une des revendications 1 à 4, **caractérisé en ce que** :
le terminal de communication (50) orienté client est un terminal de communication mobile,
**en ce que** le système (1) basé sur une carte comprend au moins un dispositif de lecture de carte (10, 15), lequel est associé au fournisseur d'une application basée sur une carte,
**en ce que** l'étape d) est exécutée dans le dispositif (10) associé au fournisseur, et
**en ce que**, avant l'exécution de l'étape d), une connexion sans fil à courte distance est établie entre le dispositif de lecture de carte (10, 15) du fournisseur et le terminal de communication mobile orienté client.

7. Procédé selon l'une quelconque des revendications précédentes, **caractérisé en ce que** :
les cartes à installer dans le dispositif de gestion de carte (70) sont préalablement certifiées,
et/ou **en ce que**
à l'étape a), la connexion sécurisée est certifiée, et/ou **en ce que**
la connexion sécurisée est une connexion Internet.

8. Dispositif de gestion de carte, lequel est conçu pour être utilisé dans un procédé selon l'une des revendications 1 à 7, comprenant :
plusieurs lecteurs de carte (75, 76) sans contact et/ou à contact, qui sont conçus chacun pour recevoir et pour lire une carte (90, 91) orientée utilisateur réalisée sous la forme d'un module matériel,
un deuxième dispositif de commande (74) programmable,
un dispositif de sécurité (80), et
un dispositif d'accès au réseau (73),
le dispositif de sécurité (80) et une application d'accès à la carte (61) d'un terminal de communication (50, 100) associé à un utilisateur étant conçus pour exécuter une authentification entre le terminal de communication (50, 100) et le dispositif de gestion de carte (70), afin d'authentifier le terminal de communication (50, 100),
le dispositif de sécurité (80) étant conçu pour commander l'établissement d'une connexion sécurisée avec le terminal de communication (50, 100),
l'application d'accès à la carte (61, 111) étant conçue pour sélectionner, au moyen du premier dispositif de commande (53, 101) programmable, une carte (90, 91) orientée utilisateur installée dans le dispositif de gestion de carte (70) et pour commander la communication entre une application basée sur une carte et la carte (90, 91) orientée utilisateur sélectionnée par l'intermédiaire d'une connexion sécurisée établie.

9. Système basé sur une carte (1, 5) comprenant .
- un terminal de communication (50, 100) associé à un utilisateur comprenant les caractéristiques suivantes :
une application d'accès à la carte (61, 111) installée dans le terminal de communication (50, 100),
une première unité de commande (53, 101) programmable, et
un dispositif d'accès au réseau (54, 114),
- un dispositif de gestion de carte (70) associé à l'utilisateur selon la revendication 8.

10. Système basé sur une carte selon la revendication 9, **caractérisé en ce que** :
un code d'identification prioritaire servant à individualiser le dispositif de gestion de carte (70) est mis en mémoire dans le dispositif de sécurité (80, 81),
**en ce que** les cartes (90, 91) orientées utilisateur installées dans le dispositif de gestion de carte (70) sont chacune sécurisées par un code d'identification individuel, lesquels sont mis en mémoire dans une mémoire (77) du dispositif de gestion de carte (70),
l'application d'accès à la carte (61, 111) du terminal de communication (50, 100) étant conçue pour demander à l'utilisateur d'introduire le code d'identification prioritaire, et
le dispositif de gestion de carte (70) étant conçu pour lire le code d'identification individuel de la carte (90, 91) orientée utilisateur sélectionnée dans la mémoire (77), en réponse à la réception du code d'identification prioritaire par le terminal de communication (50, 100), et pour le transmettre à la carte orientée utilisateur sélectionnée.

11. Système basé sur une carte selon la revendication 9 ou 10, **caractérisé en ce que** le dispositif de gestion de carte (70) est conçu pour identifier une carte (90, 91) orientée utilisateur insérée dans un lecteur de carte (75, 76) et pour établir une association entre la carte (90, 91) identifiée et le lecteur de carte (75, 76) respectif.

12. Système basé sur une carte selon l'une des revendications 9 à 11, **caractérisé en ce que** :
le dispositif de gestion de carte (70) comprend un scanner de carte (72) qui est conçu pour balayer au moins une zone prédéfinie d'une carte (90, 91) orientée utilisateur à installer, et
**en ce que** le dispositif de sécurité (80) est conçu pour contrôler l'authenticité de la carte (90, 91) à installer et/ou pour signer d'une identité numérique l'au moins une zone balayée.

13. Système basé sur une carte selon l'une des revendications 9 à 12, **caractérisé en ce qu'**une application basée sur une carte est installée dans le terminal de communication (100).

14. Système basé sur une carte selon l'une des revendications 9 à 13, **caractérisé en ce que** :
le terminal de communication (50) orienté utilisateur est un terminal de communication mobile, qui comprend au moins une interface de communication sans fil à courte distance (51, 52),
**en ce qu'**au moins un dispositif de lecture de carte (10, 20 ; 15 ; 25) associé au fournisseur d'une application basée sur une carte est prévu,
le dispositif de lecture de carte (10, 20 ; 15, 25) du fournisseur comprenant au moins une interface de communication sans fil à courte distance (21, 22) et/ou une interface de communication à contact (31), à laquelle un adaptateur (40) peut être raccordé au moyen d'une interface de communication sans fil à courte distance (41, 42), et étant conçu pour communiquer avec l'au moins une interface de communication sans fil à courte distance (51, 52) du terminal de communication (50),
**en ce que** le dispositif (10) associé au fournisseur est conçu pour exécuter une application basée sur une carte, et
**en ce que** l'application d'accès à la carte (61) du terminal de communication mobile (50) est conçue pour commander, au moyen du premier dispositif de commande (53) programmable, la communication entre l'application basée sur une carte exécutée par le dispositif (10) du fournisseur et une carte (90) orientée utilisateur sélectionnée dans le dispositif de gestion de carte (70) par l'intermédiaire d'une connexion à courte distance entre le lecteur de carte (20, 25) du fournisseur et le terminal de communication (50) et par l'intermédiaire d'une connexion sécurisée.

15. Système basé sur une carte selon l'une des revendications 9 à 13, **caractérisé en ce que** le dispositif de sécurité (80) est conçu pour commander l'établissement d'une connexion sécurisée et le cas échéant certifiée avec le terminal de communication (50, 100).

16. Système basé sur une carte selon l'une des revendications 9 à 15, **caractérisé en ce que** :
les cartes (90, 91) orientées utilisateur sont des cartes à puce
et/ou **en ce que**
le dispositif d'accès au réseau (54, 114) du terminal de communication (50, 100) et le dispositif d'accès au réseau (73) du dispositif de gestion de carte (70) associé à l'utilisateur sont chacun un dispositif d'accès à Internet.

17. Programme informatique contenant une pluralité d'applications, qui peuvent être mises en mémoire dans un terminal de communication (50, 100) orienté utilisateur et dans un dispositif de gestion de carte (70) orienté utilisateur d'un système basé sur une carte, les applications, lorsqu'elles sont lues et traitées par un dispositif de commande (53, 101) programmable du terminal de communication (50, 100) et par un dispositif de commande (74) programmable du dispositif de gestion de carte (70), exécutant le procédé selon l'une des revendications 1 à 7.
